# EUROPÄISCHE PATENTSCHRIFT

(11) **EP 0 414 017 B1**
(45) Veröffentlichungstag und Bekanntmachung des Hinweises auf die Patenterteilung: **06.11.1996**
(21) Anmeldenummer: 90115012.8
(22) Anmeldetag: 04.08.1990
(51) Int. Cl.: H04N 7/36

(54) **Verfahren zur objektorientierten Bewegungskompensation von Bildinformation für die verbesserte Wiedergabe codierter Bewegtbildsequenzen**
Method for object-oriented movement compensation of picture information for the reproduction of coded moving picture sequences
Procédé de compensation du mouvement orienté d'objet d'information d'image pour la reproduction de sequences d'images animées codées

(30) Priorität: 21.08.1989 DE 3927516
(43) Veröffentlichungstag der Anmeldung: 27.02.1991
(73) Patentinhaber: ROBERT BOSCH GMBH, 70442 Stuttgart (DE)
(72) Erfinder: Stiller, Christoph, Dipl.-Ing., D-5100 Aachen (DE)

(56) Entgegenhaltungen:
- WO-A-80/01976
- FREQUENZ: ZEITSCHRIFT FüR TELEKOMMUNIKATION Bd. 43, Nr. 5, Mai 1989, BERLIN, DE Seiten 126 - 133; GILGE ET AL: 'Codierung von farbigen Bewegtbildszenen mit 64 kbit/s - Ein neuer Ansatz zur Verwirklichung eines Bildtelefons im ISDN (Teil lll)'
- PATENT ABSTRACTS OF JAPAN vol. 11, no. 312 (E-548)(2759) 12. Oktober 1987 & JP-A-62 104 387
- IEEE TRANSACTIONS ON PATTERN ANALYSIS AND MACHINE INTELLIGENCE Bd. 11, Nr. 7, Juli 1989, NEW YORK, US Seiten 742 - 748; STROBACH: 'Quadtree-Structured Linear Prediction Models for Image Sequence Processing'
- PATENT ABSTRACTS OF JAPAN vol. 11, no. 312 (E-548)12. Oktober 1987 & JP-A-62 104 283

## Beschreibung

Die Erfindung betrifft ein Verfahren zur objektorientierten Bewegungskompensation von Bildinformationen für die verbesserte Wiedergabe codierter Bewegtbildsequenzen, gemäß dem Oberbegriff des Patentanspruchs 1.

Bei üblichen Bewegtbildcodern wird das Bild in quadratische Teilbildbereiche (Blöcke), zum Beispiel der Größe 16 x 16 Bildpunkte unterteilt und die Bewegung zum nächsten Bild für jeden dieser Blöcke ermittelt. Dadurch ergibt sich ein Bewegungsvektorfeld, welches codiert wird. Sender und Empfänger erzeugen ein Prädiktionsbild, indem jeder Block aus dem vorhergehenden Bild entsprechend der zugehörigen Bewegungsinformation, zum Beispiel dem zugehörigen Bewegungsvektor, verschoben wird (DE 37 04 777 C1).

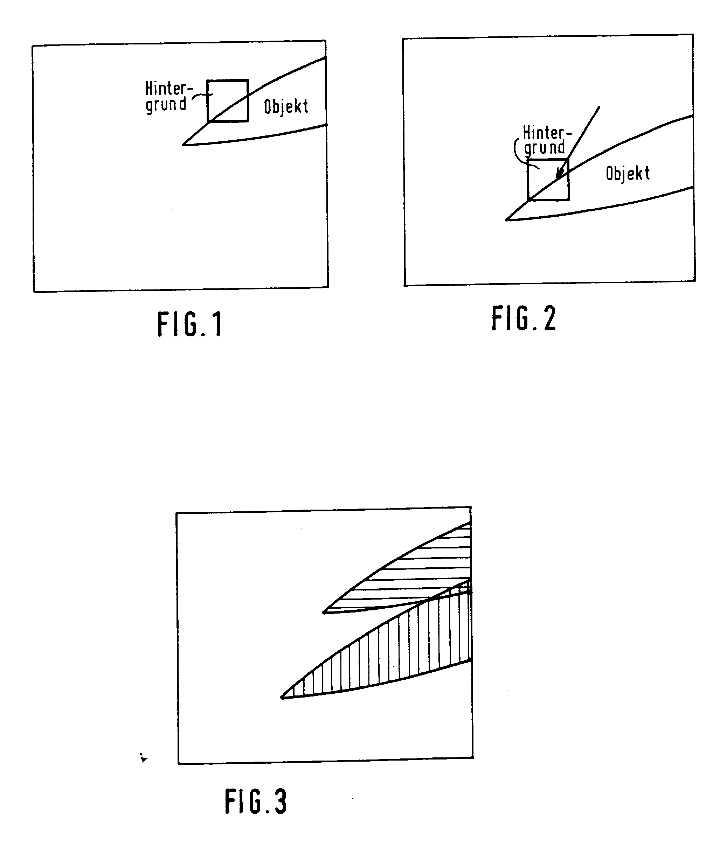

Enthält ein Block sowohl bewegten Bildanteil (Objekt) als auch unbewegten Bildanteil (Hintergrund), so kann der Bewegungsvektor nur die Bewegung eines der beiden Teile beschreiben. Der andere Teil wird dennoch mit diesem Bewegungsvektor verschoben, wodurch in diesem Bereich ein fehlerhaftes Prädiktionsbild entsteht, wie in Figur 1 bis Figur 2 beispielhaft für einen Block dargestellt. Meist wird, wie in Figur 2, der Hintergrund in der Nähe des Objektes auf diese Weise mitbewegt. Die Figuren 1 und 2 zeigen zwei aufeinanderfolgende Bilder, wobei Figur 2 das aktuelle Bild k und Figur 1 ein zeitlich davor liegendes Bild k-l darstellt. Für einen Block, der sowohl Objekt als auch Hintergrund enthält, ist in Figur 2 beispielhaft das fehlerhafte Mitverschieben des Hintergrundes in der Umgebung eines Objektes dargestellt.

Aus Frequenz: Zeitschrift für Telekommunikation, Band 43, Nr. 5, Mai 1989, Berlin, DE, Seiten 126 bis 133; Gilge et al: Codierung von farbigen Bewegtbildszenen mit 64 kbit/s - ein neuer Ansatz zur Verwirklichung eines Bildtelefons im ISDN (Teil III) ist ein Verfahren zur objektorientierten Bewegungskompensation von Bildinformation bekannt. Es erfolgt dort eine Segmentierung mittels Masken zwischen bewegtem Objekt, festem Hintergrund und freiwerdendem oder verdeckt werdendem Hintergrund. Es wird dort darauf hingewiesen, daß Verbesserungen des Schätzbildes für ein DPCM-Verfahren durch Ausnutzung der Korrelation zwischen Bewegungsinformation und Restfehlercodierung erreicht werden können.

Aufgabe vorliegender Erfindung ist es, ein Verfahren zur objektorientierten Bewegungskompensation von Bildinformation anzugeben, welches zu einer verbesserten Wiedergabe codierter Bewegtbildsequenzen führt. Diese Aufgabe wird durch die Schritte des Patentanspruchs 1 gelöst. Die übrigen Patentansprüche betreffen vorteilhafte Weiterbildungen des Verfahrens.

Das Verfahren nach der Erfindung basiert auf einer verbesserten Bewegungskompensation, bei der das Bild nicht mehr, wie bei herkömmlichen Verfahren üblich, blockweise verschoben wird, sondern bewegte Bildinhalte erkannt und unabhängig vom umgebenden Hintergrund verschoben werden. Das Verfahren ermittelt also statt eines bildbereichsweise orientierten Prädiktionsbildes, zum Beispiel eines blockorientierten Prädiktionsbildes ein objektorientiertes Prädiktionsbild. Hierfür werden empfängerseitig Form und Ort des bewegten Bildinhaltes aus der üblicherweise übertragenen codierten Bewegungsinformation, zum Beispiel den übertragenen Bewegungsvektoren, und der herkömmlich decodierten Bildsequenz ermittelt.

Das Verfahren nach der Erfindung basiert auf der Erstellung einer Objektmaske, welche für jedes Bild Lage und Ort des bewegten Bildanteils beschreibt. Mit dieser Objektmaske läßt sich ein empfangsseitig aufbereitetes Prädiktionsbild verbessern. Mit dieser Objektmaske kann der bewegte Bildanteil unabhängig vom Bildhintergrund verschoben werden. Ausgelassene Zwischenbilder lassen sich mit dem Verfahren nach der Erfindung bewegungsadaptiv interpolieren.

Anhand der Zeichnungen wird die Erfindung nun näher erläutert: Es zeigen
Figur 3 die Objektmaske für zwei zeitlich aufeinanderfolgende Bilder,
Figur 4 Blöcke mit dazugehörigen Bewegungsvektoren im Bereich der Objektmaske,
Figur 5 ein Ablaufdiagramm zur Ermittlung der Objektmaske,
Figur 6 ein Blockschaltbild für die empfangsseitige Aufbereitung eines Prädiktionsbildes
Figur 7 ein Ablaufdiagramm zur Verbesserung der Objektmaske anhand des Restfehlerbildes.

Figur 3 zeigt eine Objektmaske, d.h. einen Bereich, welcher für jedes Bild Lage und Ort des bewegten Bildanteils beschreibt, für ein aktuelles Bild k (vertikal schraffiert) und eine Objektmaske für ein zeitlich davor liegendes Bild k-1 (horizontal schraffiert). Im einfachsten Fall kann eine solche Objektmaske durch ein Binärbild dargestellt werden, welches den Wert "1" genau dort besitzt, wo sich bewegter Bildanteil befindet und den Wert "0", wo statischer Hintergrund vorliegt. Wie eine solche Objektmaske ermittelt werden kann, wird später noch erläutert.

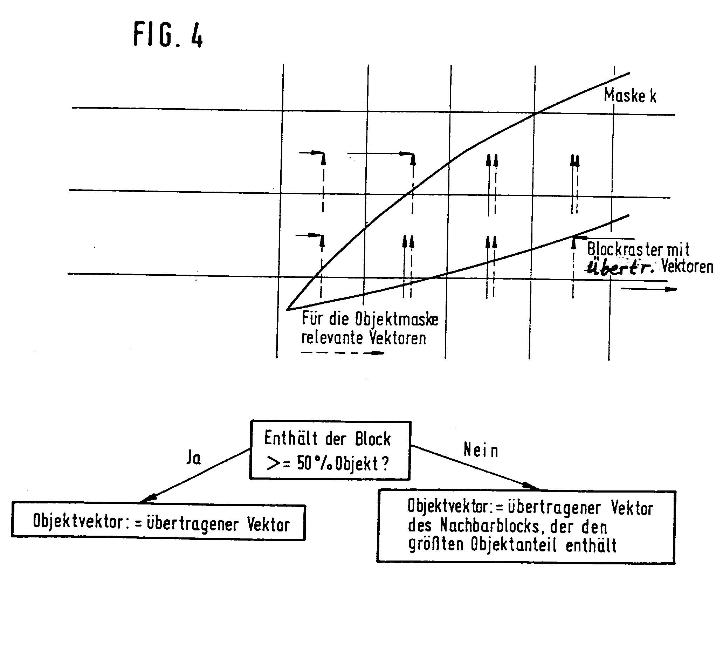

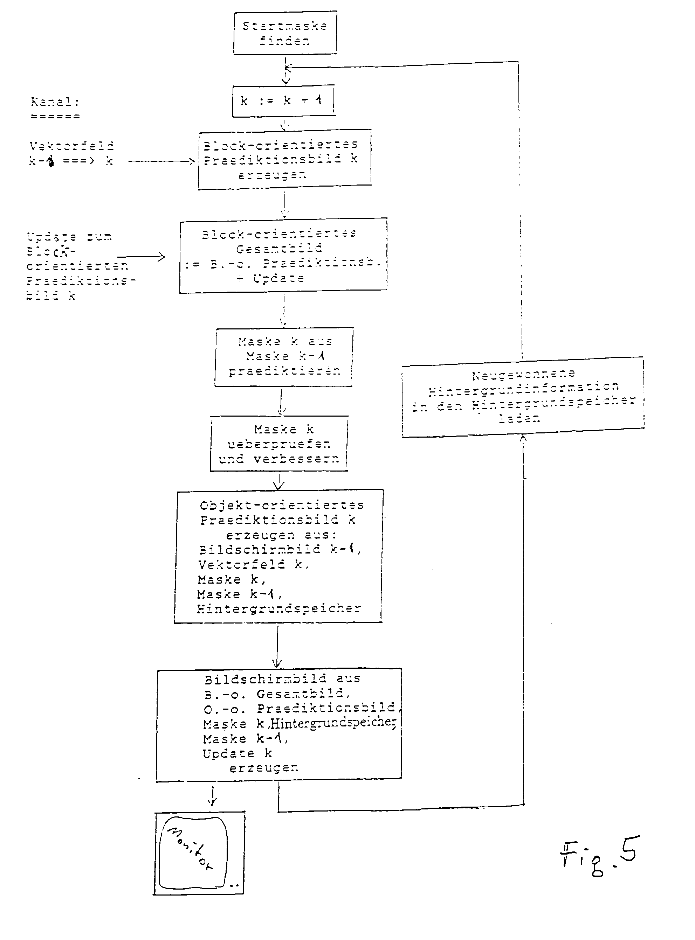

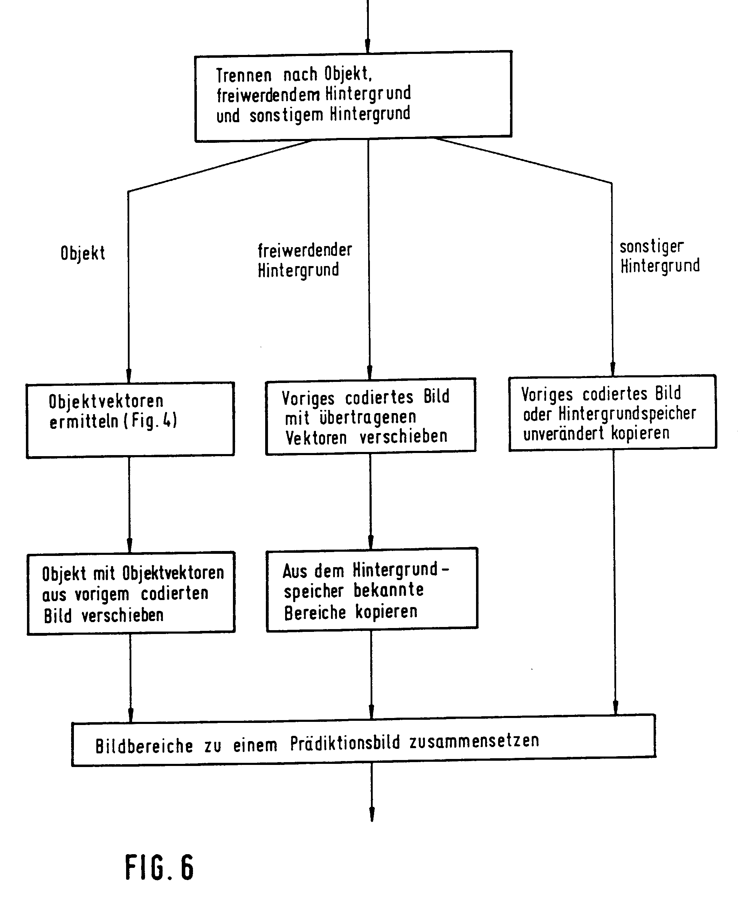

Das Bild wird anhand einer solchen Objektmaske nach den folgenden drei Teilbereichen unterschieden und jeder dieser Teilbereiche wird unterschiedlich prädiziert (Figur 6).
a) Objekt k (Objektmaske k) (Figur 4)
   Im einfachsten Fall wird in diesem Bereich jeder Block entsprechend des zugehörigen Bewegungsvektors verschoben. Von jedem Block wird jedoch nur der Anteil auf diese Weise prädiziert, der in der Objektmaske liegt, d. h. der Anteil, für den die Objektmaske den Wert "1" enthält. Als Verfahrensvariante kann aus dem übertragenen Bewegungsvektorfeld wie folgt ein objektorientiertes Bewegungsvektorfeld ermittelt werden, welches im Bereich des Objekts erhöhte Zuverlässigkeit besitzt.
   Liegt ein Block nur zu einem kleinen Teil in der Objektmaske (z.B. weniger als 50 %), so ist bei den meisten Bewegungsschätzverfahren wahrscheinlich, daß der Bewegungsvektor nicht die Bewegung des Objekts, sondern die Bewegung des Hintergrunds beschreibt. Der zugehörige Bewegungsvektor wäre also der Nullvektor. Daher wird für einen solchen Block überprüft, ob einer der vier Nachbarblöcke einen größeren Anteil am Objekt aufweist. Dann wird der Vektor desjenigen Nachbarblocks, der den größten Anteil im Objekt liegen hat, für den betrachteten Block gewählt. Dieser Block hat am wahrscheinlichsten einen Bewegungsvektor, der die Bewegung des Objekts beschreibt. Auch bei dieser Verfahrensvariante wird von jedem Block nur der Anteil, der in der Objektmaske k liegt, auf diese Weise prädiziert.
b) Freiwerdender Hintergrund (Objektmaske k-1 aber nicht Objektmaske k).
   Für den Hintergrund wird ein Bildspeicher verwendet, in den bekannter Hintergrund eingeschrieben wird. Ist der freiwerdende Hintergrund in diesem Hintergrundspeicher bekannt, so wird er aus diesem Speicher kopiert. Der restliche, im Hintergrundspeicher unbekannte Teil des freiwerdenden Hintergrundes wird prädiziert, indem jeder Block gemäß des übertragenen Vektors aus dem vorherigen Bild verschoben wird.
c) Sonstiger Hintergrund (weder Objektmaske k-1 noch Objektmaske k).
   Der sonstige Hintergrund wird aus Bild k-l unverändert für das Prädiktionsbild übernommen oder alternativ dazu aus dem Hintergrundspeicher kopiert.

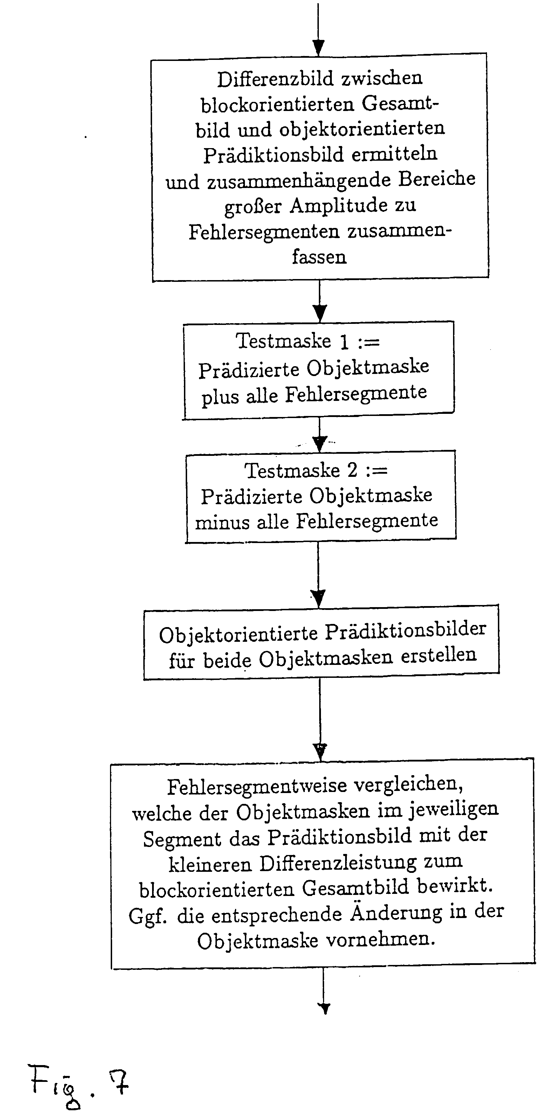

Einen Überblick über das Verfahren zur Erzeugung einer Objektmaske gibt Figur 5. Ausgehend von einer beliebigen Startmaske, z.B. einer Maske, die überall den Wert 0 hat, wird die Maske k im einfachsten Fall dadurch ermittelt, daß die Maske k-1 blockweise entsprechend der vom Kanal übertragenen Bewegungsinformation/den Bewegungsvektoren verschoben wird. Als Verfahrensvariante wird die Maske k-1 blockweise entsprechend der objektorientierten Bewegungsvektoren, deren Ermittelung oben beschrieben ist, verschoben. Die so erstellte Maske wird, wie in Figur 7 dargestellt und im folgenden beschrieben, anhand des Restfehlerbildes verbessert.Es wird eine erste Näherung des objektorientierten Prädiktionsbildes k wie zuvor beschrieben und in Figur 6 dargestellt konstruiert. Im Empfänger wird ein Differenzbild (= Restfehlerbild) zwischen diesem vorläufigen Prädiktionsbild und dem blockorientiert codierten Bild erstellt. Bildbereiche, an denen eine besonders große Differenz auftritt, werden zu Fehlersegmenten zusammengefaßt. Für jedes dieser Fehlersegmente wird überprüft, ob sich die Leistung des Differenzbildes verkleinert, wenn die Objektmaske in diesem Segment geändert wird. Dafür wird das Prädiktionsbild konstruiert, welches sich ergibt, wenn der Wert der Objektmaske für alle Fehlersegmente zu "1" gesetzt wird und das Prädiktionsbild konstruiert, welches sich ergibt, wenn der Wert der Objektmaske für alle Fehlersegmente zu "0" gesetzt wird. Für beide Prädiktionsbilder wird in jedem Fehlersegment die Differenz zum blockorientierten codierten Bild (blockorientiertes Prädiktionsbild plus zugehöriges Restfehlerbild ermittelt. Das Restfehlerbild ist jener Bildanteil, der den Unterschied zwischen dem blockorientiert decodierten Bild und einem Prädiktionsbild entspricht. Es wird als "Update" zum blockorientierten Prädiktionsbild über den Kanal übertragen.

Die Leistung dieser beiden Differenzbilder, wird fehlersegmentweise verglichen. Falls die Verringerung der Differenzbildleistung durch Änderung eines Segments in der Maske größer ist als die Rauschleistung, so wird der Wechsel in der Objektmaske vorgenommen, d.h. das Segment wird neu in die Objektmaske genommen bzw. aus ihr entfernt.

Zuletzt werden Segmente, welche nur aus wenigen Bildpunkten bestehen, aus der Objektmaske entfernt.

Als Variante kann zusätzlich der Bildinhalt des Hintergrundspeichers mit dem Bewegungsvektorfeld des Prädiktionsbildes verschoben werden. Durch Vergleich mit dem Prädiktionsbild werden dann die ähnlichen Bildbereiche erkannt, an denen bekannter Hintergrund fälschlicherweise mitbewegt wurde. In diesen Bereichen wird die Objektmaske zu "0" gesetzt, falls die Differenzleistung zwischen unverschobenem Hintergrund und blockorientiert codierten Bild klein ist und sich die Differenzleistung durch das Restfehlerbild nicht vergrößert hat.

Mit Hilfe dieser Objektmaske wird nun nach dem zuvor beschriebenen Verfahren (Figur 6) endgültig das objektorientierte Prädiktionsbild erstellt.

Es wird erzeugt, wie in Figur 5 dargestellt, aus dem Bildschirmbild k-1, dem Vektorfeld k, der Maske k, der Maske k-1 und dem Inhalt des Hintergrundspeichers.

Ein verbessertes Bild für die Darstellung auf dem Monitor wird gemäß Figur 5 erstellt unter Zuhilfenahme des blockorientierten Gesamtbildes, des objektorientierten Prädiktionsbildes, der Maske k, des Hintergrundspeichers, der Maske k-1 und des "Updates" k. Das blockorientiert codierte Bild wird demnach kopiert und der nicht in der Objektmaske liegende Bereich (freiwerdender oder sonstiger Hintergrund) aus dem Hintergrundspeicher dort, wo er bekannt ist, überschrieben.

Der in der Objektmaske liegende Bereich (= bewegtes Objekt) kann als Ausgestaltung der Erfindung zusätzlich tiefpaßgefiltert werden. Eine solche Tiefpaßfilterung steht im Einklang mit dem menschlichen visuellen Wahrnehmungsvermögen, da das menschliche Auge bewegte Bildinhalte ohnehin nicht scharf erfaßt. Da die Tiefpaßfilterung auf der anderen Seite kleine Fehler und Rauschen glättet und so dem Betrachter einen ruhigen Bildeindruck vermittelt, verbessert sie subjektiv die Bildqualität.

Häufig wird von Bewegtbildcodern die Bildsequenz unterabgetastet. Die ausgelassenen Zwischenbilder werden dann im Empfänger bewegungsabhängig interpoliert. Aber auch bei nicht unterabgetasteten Bildsequenzen ist es bei manchen Anwendungsfällen, z.B. Wiedergabe auf einem HDTV-Monitor, sinnvoll zur Verbesserung der Wiedergabequalität Zwischenbilder zu interpolieren.

Analog zum oben beschriebenen Verfahren zur Konstruktion des objektorientierten Prädiktionsbildes kann mit Hilfe der Objektmaske auch bei bewegungsadaptiver Zwischenbildinterpolation der bewegte Bildinhalt unabhängig vom Hintergrund verschoben werden. Für die unbewegte Bild-Hintergrundinformation werden die codierten Bewegungsinformationen, z. B. die Bewegungsvektoren, zu Null gesetzt. Die innerhalb der Objektmaske liegenden codierten Bewegungsinformationen werden zur Rekonstruktion der Zwischenbilder entsprechend des zeitlichen Abstandes zwischen vorgegebenen und zu interpolierenden Bildern, bzw. entsprechend der zeitlichen Unterabtastung, skaliert. Mit diesen skalierten Bewegungsvektoren wird dann, wie zuvor erläutert, ein objektorientiertes Prädiktionsbild erzeugt, welches als Zwischenbild dargestellt wird. Bei einer zeitlich 1:3 unterabgetasteten Bildfolge von der die Bilder k und k + 3 codiert wurden, lassen sich z. B. die Zwischenbilder wie folgt bestimmen:

Bild k + 1 wird ermittelt, wie das objektorientierte Pradiktionsbild, welches sich aus Bild k und dem mit 1/3 skalierten Vektorfeld zwischen Bild k und Bild k + 3 ergibt.

Bild k + 2 wird ermittelt, wie das objektorientierte Prädiktionsbild, welches sich aus Bild k + 3 und dem mit - 1/3 skalierten Vektorfeld zwischen Bild k und Bild k + 3 ergibt.

## Patentansprüche

1. Verfahren zur objektorientierten Bewegungskompensation von Bildinformationen für die verbesserte Wiedergabe codierter Bewegtbildsequenzen mit folgenden Verfahrensschritten:
a) Zerlegen des Bildes in Blöcke
b) Trennen nach bewegtem Objekt, freiwerdendem Hintergrund, das heißt Bildinformation, die durch die Objektbewegung zwischen einem vorangegangenen Bild und einem aktuellen Bild nicht mehr verdeckt ist und sonstigem Hintergrund, insbesondere Bildinformationen, die weder im aktuellen Objekt noch im Objekt des zeitlich davorliegenden Bildes auftauchen,
c) Erstellen eines Prädiktionsbildes, getrennt nach Objekt, freiwerdendem Hintergrund und sonstigem Hintergrund,
d1) für Bildbereiche, zum Beispiel Bildblöcke, die einen Anteil im Ojekt haben:
Verschieben des Objekts aus dem vorherigen codierten Bild mit einer objektorientierten Bewegungsinformation, zum Beispiel einem Bewegungsvektor,
d2) Verschieben des freiwerdenden Hintergrundes unter Verwendung eines Bildspeichers, in den bekannte Bildhintergrundinformation zuvor eingeschrieben wurde, ansonsten Prädizieren des unbekannten Teils des freiwerdenden Bildhintergrundes, indem jeder Bildbereich gemäß der codierten Bewegungsinformation aus dem vorherigen Bild verschoben wird,
d3) unverändertes Übernehmen des sonstigen Hintergrundes aus dem vorherigen Bild oder aus dem Hintergrund-Bildspeicher,
e) Zusammensetzen aller in den Schritten d1) bis d3) gewonnenen Bilbereiche zu einem Prädiktionsbild,
dadurch gekennzeichnet, daß zur Trennung gemäß Schritt b) eine Objektmaske verwendet wird, die folgendermaßen aufbereitet wird:
f) Ermitteln eines Differenzbildes zwischen dem nach einem blockorientierten Verfahren empfangsseitig wiedergewonnenen Bild und dem nach Schritt e) ermittelten Prädiktionsbild,
g) Zusammenfassen jener zusammenhängenden Bildbereiche, an denen eine besonders große Differenz auftritt, zu Fehlersegmenten,
h) fehlersegmentweises Ändern der Objektmaske, welche für jedes Bild Lage und Ort des bewegten Bildanteils beschreibt, durch Hinzufügen eines jeweiligen Fehlersegments zur Objektmaske beziehungsweise Entfernen des jeweiligen Fehlersegments aus der Objektmaske, wenn sich die Differenzbildleistung dann verringert.

2. Verfahren nach Anspruch 1, dadurch gekennzeichnet, daß zur Trennung gemäß dem Schritt b) des Patentanspruchs 1 folgende weitere Schritte erfolgen:
i) Bereitstellen einer beliebigen Startobjektmaske, zum Beispiel eines Binärbildes, welches überall den Wert Null hat, als Objektmaske,
j) Prädizieren einer vorläufigen aktuellen Objektmaske, welche für jedes Bild Lage und Ort des bewegten Bildanteils beschreibt, indem die zuvor ermittelte Objektmaske - im Falle der Erstermittlung die Startmaske - anhand der objektorientierten Bewegungsinformation, zum Beispiel Bewegungsvektoren, verschoben wird,
k) Erstellen eines ersten Prädiktionsbildes, welches sich ergibt, wenn der Wert der Objektmaske für die Fehlersegmente so gewählt wird, zum Beispiel "1", daß bewegter Bildanteil angenommen wird, nach den Schritten d1) bis d3) des Anspruchs 1,
l) Erstellen eines zweiten Prädiktionsbildes, welches sich ergibt, wenn der Wert der Objektmaske für die Fehlersegmente so gewählt wird, zum Beispiel "0", daß unbewegter Bildanteil angenommen wird, nach den Schritten d1) bis d3) des Anspruchs 1,
m) Bilden der Differenz zwischen dem nach einem blockorientierten Verfahren empfangsseitig wiedergewonnenen Bild und jeweils dem ersten und zweiten Prädiktionsbild in jedem Fehlersegment,
n) fehlersegmentweises Vergleichen dieser zuletzt gewonnenen Differenzbilder bezüglich der Leistung.

3. Verfahren nach Anspruch 1, zum Erstellen eines verbesserten Bildes, insbesondere zur Bildwiedergabe auf einem Monitor, gekennzeichnet durch folgende Schritte:
o) Der Bildanteil, der in einer insbesondere nach Anspruch 2 aufbereiteten Objektmaske liegt, wird aus dem nach einem blockorientierten Verfahren empfangsseitig wiedergewonnenen Bild kopiert,
p) Der nicht in der Objektmaske liegende Bereich wird aus dem Hintergrundspeicher, dort wo er bekannte Information enthält, und sonst ebenfalls aus dem nach einem blockorientierten Verfahren empfangsseitig wiedergewonnenen Bild kopiert.

4. Verfahren nach Anspruch 1 und 2, dadurch gekennzeichnet, daß zur Gewinnung einer verbesserten objektorientierten Bewegungsinformation folgende Schritte angewendet werden:
q) Prüfen, ob ein Bildbereich nur zu einem geringen Teil, zum Beispiel kleiner als 50 %, in der Objektmaske liegt und für solche Bildbereiche prüfen, ob einer der Nachbarbildbereiche dieses Bildbereichs zu einem großen Teil in der Objektmaske liegt; falls einer der Nachbarbildbereiche zu einem großen Teil, zum Beispiel größer als 50 %, in der Objektmaske liegt, Auswählen der Bewegungsinformation, zum Beispiel des Bewegungsvektors, desjenigen Nachbarbildbereichs anstelle des zum geringeren Teil in der Objektmaske liegenden Bildbereiches, der den größten Teil mit der Objektmaske gemeinsam hat.

5. Verfahren nach Anspruch 2 oder 4, gekennzeichnet durch folgende empfangsseitige Erstellung einer endgültigen Objektmaske:
r) Bereitstellen einer Startobjektmaske, zum Beispiel einer Objektmaske in Form eines Binärbildes, welches überall den Wert Null hat,
s) Ermitteln einer vorläufigen aktuellen Objektmaske dadurch, daß die zuvor ermittelte Objektmaske bildbereichsweise entsprechend der objektorientierten Bewegungsinformation, zum Beispiel Bewegungsvektoren, verschoben wird,
t) Erstellen eines vorläufigen Prädiktionsbildes, nach den Schritten d1) bis d3) des Patentanspruchs 1,
u) Verschieben der Bild-Hintergrundinformation mittels der codierten Bewegungsinformation für das vorläufige Prädiktionsbild,
v) Vergleichen der so verschobenen Bild-Hintergrundinformation mit dem Prädiktionsbild zur Erkennung ähnlicher Bildbereiche; das heißt Bildbereiche, in denen bekannte Hintergrundinformation fälschlicherweise mitbewegt wurde,
w) Ändern jener Werte der Objektmaske, zum Beispiel von 1 zu 0, die unbewegtem Bildanteil entsprechen, in diesen ähnlichen Bereichen, falls die Differenzbildleistung zwischen unverschobenem Hintergrund und bildbereichsorientiert codiertem Bild, zum Beispiel blockorientiert codiertem Bild, klein ist und sich die Differenzbildleistung durch das Restfehlbild - Differenz zwischen einem dem blockorientiert codierten Bild und dem Prädiktionsbild - nicht vergrößert hat,
x) weiteres Verbessern der Objektmaske mit Hilfe der Schritte f) bis h) nach Patentanspruch 1.

6. Verfahren nach Anspruch 3, zum Erstellen eines weiter verbesserten Bildes, dadurch gekennzeichnet, daß in den Schritten o) und p) des Anspruchs 3 anstelle der Objektmaske die in Schritt x) des Anspruchs 5 weiter verbesserte Objektmaske angewendet wird.

7. Verfahren nach Anspruch 5, dadurch gekennzeichnet, daß eine Änderung der Objektmaske nur dann vorgenommen wird, wenn die Verringerung der Differenzbildleistung noch über einer Schwelle, zum Beispiel der Rauschleistung, liegt.

8. Verfahren nach einem der Ansprüche 2 bis 7, dadurch gekennzeichnet, daß Objekte, die nur aus wenigen Bildpunkten bestehen, aus der Objektmaske entfernt werden.

9. Verfahren nach einem der Ansprüche 2 bis 8, dadurch gekennzeichnet, daß der Anteil des Wiedergabebildes, der innerhalb der Objektmaske liegt, zusätzlich tiefpaßgefiltert wird.

10. Verfahren nach einem der Ansprüche 1 bis 9, zur empfangsseitigen Interpolation von Zwischenbildern, indem für die unbewegte Bild-Hintergrundinformation die codierten Bewegungsinformationen, zum Beispiel die Bewegungsvektoren, zu Null gesetzt und die innerhalb der Objektmaske liegenden codierten Bewegungsinformationen entsprechend des zeitlichen Abstandes zwischen vorgegebenen und interpolierten Bildern skaliert werden, und die interpolierten Zwischenbilder wie Prädiktionsbilder gemäß den Merkmalen d1) bis d3) des Patentanspruchs 1 erstellt werden.

## Claims

1. Method for object-oriented movement compensation of image information for the improved reproduction of coded moving image sequences, having the following method steps:
a) decomposition of the image into blocks,
b) separation in terms of moving object, revealed background, that is to say image information which is no longer covered by the object movement between a preceding image and a current image, and remaining background, in particular image information which does not appear either in the current object or in the object of the image preceding in time,
c) production of a prediction image, separated in terms of object, revealed background and remaining background,
d1) for image regions, for example image blocks, which have a fraction in the object:
displacement of the object from the previously coded image by means of an object-oriented item of movement information, for example a movement vector,
d2) displacement of the revealed background using an image memory into which known image background information has been entered beforehand, otherwise prediction of the unknown part of the revealed image background by displacing each image region in accordance with the coded movement information from the preceding image,
d3) unchanged adoption of the remaining background from the preceding image or from the background image memory,
e) combination of all the image regions obtained in steps d1) to d3) to form a prediction image, characterized in that for the purpose of the separation in accordance with step b) use is made of an object mask which is prepared as follows:
f) determination of a differential image between the image retrieved at the receiving end using a block-oriented method and the prediction image determined according to step e),
g) combination of those connected image regions where a particularly large difference occurs to form error segments,
h) changing the object mask, which describes the position and location of the moving image fraction for each image, in terms of error segments by adding a respective error segment to the object mask or removing the respective error segment from the object mask if the differential image power is then reduced.

2. Method according to Claim 1, characterized in that the following further steps are performed for the purpose of the separation in accordance with step b) of Patent Claim 1:
i) provision of an arbitrary initial object mask, for example a binary image, which has the value zero everywhere, as object mask,
j) prediction of a provisional current object mask which describes the position and location of the moving image fraction for each image by displacing the previously determined object mask - the initial mask in the case of initial determination - with the aid of the object-oriented movement information, for example movement vectors,
k) production of a first prediction image which is yielded when the value of the object mask for the error segments is selected, for example to be "1", such that the moving image fraction is adopted according to steps d1) to d3) of Claim 1,
l) production of a second prediction image which is yielded if the value of the object mask is selected for the error segments, for example to be "0", such that the stationary image fraction is adopted according to steps d1) to d3) of Claim 1,
m) formation of the difference between the image, retrieved at the receiving end using a block-oriented method, and in each case the first and second prediction image in each error segment,
n) comparison in terms of error segments of these differential images last obtained in relation to output.

3. Method according to Claim 1, for producing an improved image, in particular for reproducing images on a monitor, characterized by the following steps:
o) the image fraction which is situated in an object mask prepared, in particular, according to Claim 2, is copied from the image retrieved at the receiving end using a block-oriented method,
p) the region not situated in the object mask is copied from the background memory where it contains known information, and otherwise likewise from the image retrieved at the receiving end using a block-oriented method.

4. Method according to Claims 1 and 2, characterized in that the following steps are applied in order to obtain improved object-oriented movement information:
q) checking as to whether an image region is situated in the object mask only to a small extent, for example less than 50%, and, for such image regions, checking as to whether one of the adjacent image regions of this image region is situated in the object mask to a large extent; if one of the adjacent image regions is situated in the object mask to a large extent, for example greater than 50%, selection of the movement information, for example the movement vector, of that adjacent image region which has the largest part in common with the object mask instead of the image region situated in the object mask to the smaller extent.

5. Method according to Claim 2 or 4, characterized by the following production at the receiving end of a final object mask:
r) provision of an initial object mask, for example an object mask in the form of a binary image, which has the value zero everywhere,
s) determination of a provisional current object mask by displacing the previously determined object mask in terms of image regions in accordance with the object-oriented movement information, for example movement vectors,
t) production of a provisional prediction image according to steps d1) to d3) of Patent Claim 1,
u) displacement of the image background information by means of the coded movement information for the provisional prediction image,
v) comparison of the image background information thus displaced with the prediction image for the purpose of detecting similar image regions, that is to say image regions in which known background information has also been moved erroneously,
w) changing those values of the object mask, for example from 1 to 0, which correspond to the stationary image fraction, in these similar regions if the differential image power is small between the undisplaced background and the image, for example the block-oriented coded image, coded in terms of image regions, and the differential image power has not been increased by the residual error image - the difference between the block-oriented coded image and the prediction image,
x) further improvement of the object mask with the aid of steps f) to h) according to Patent Claim 1.

6. Method according to Claim 3, for the purpose of producing a further improved image, characterized in that in steps o) and p) of Claim 3 the object mask further improved in step x) of Claim 5 is applied instead of the object mask.

7. Method according to Claim 5, characterized in that a change to the object mask is undertaken only if the reduction in the differential image power is still above a threshold, for example the noise power.

8. Method according to one of Claims 2 to 7, characterized in that objects which comprise only a few pixels are removed from the object mask.

9. Method according to one of Claims 2 to 8, characterized in that the fraction of the reproduction image which is situated inside the object mask is additionally low-pass filtered.

10. Method according to one of Claims 1 to 9, for the purpose of the interpolation of intermediate images at the receiving end by setting the coded movement information, for example the movement vectors, to zero for the stationary image background information, by scaling the coded movement information, situated inside the object mask, in accordance with the time interval between prescribed and interpolated images, and by producing the interpolated intermediate images as prediction images in accordance with features d1) to d3) of Patent Claim 1.

## Revendications

1. Procédé pour compenser le mouvement orienté d'objets d'informations d'images pour améliorer la reproduction de séquences d'images animées codées, procédé qui comprend les séquences suivantes :
a) découpage de l'image en blocs,
b) séparation selon l'objet animé, l'arrière-plan devenant libre, c'est-à-dire l'information d'image qui n'est plus recouverte par le mouvement de l'objet entre une image précédente et une image actuelle et un autre arrière-plan, en particulier des informations d'images, qui n'apparaissent ni dans l'objet actuel ni dans l'objet de l'image qui précède dans le temps,
c) établissement d'une image de prédiction, séparément par objet, par arrière-plan devenant libre et autre arrière-plan,
d1) pour des zones d'image, par exemple des blocs d'image, qui ont une fraction de l'objet :
Translation de l'objet à partir de l'image codée précédente avec une information de mouvement orientée d'objet, par exemple un vecteur de mouvement,
d2) translation de l'arrière-plan qui devient libre en utilisant une mémoire d'images dans laquelle on a inscrit auparavant une information connue d'arrière-plan d'image, sans prédiction de la partie inconnue de l'arrière-plan d'image devenant libre, en translatant chaque zone d'image selon l'information codée de mouvement à partir de l'image précédente,
d3) recueil inchangé du reste de l'arrière-plan à partir de l'image précédente ou à partir de la mémoire d'image d'arrière-plan,
e) rassemblement de toutes les zones d'images obtenues dans les séquences d1 à d3 en une image de prédiction,
procédé caractérisé en ce que
pour opérer la séparation selon la séquence b) on utilise un masque d'objet, qui est préparé de la manière suivante :
f) détection d'une image différentielle entre l'image ré-obtenue du côté de la réception selon un procédé orienté de blocs et l'image de prédiction détectée d'après la séquence e),
g) rassemblement de ces zones d'images interdépendantes, sur lesquelles il se produit une différence particulièrement grande, en segments de défauts,
h) modification par segments de défauts du masque d'objet, qui décrit pour chaque image la position et le lieu de la fraction animée de l'image, en ajoutant un segment de défaut correspondant au masque d'objet ou en enlevant le segment de défaut du masque d'objet, quand la puissance de l'image différentielle se réduit alors.

2. Procédé selon la revendication 1,
caractérisé en ce que
pour opérer la séparation selon la séquence b) de la revendication 1 on a les autres séquences suivantes :
i) préparation d'un masque d'objet de départ à volonté, par exemple d'une image binaire, qui a partout la valeur zéro, en tant que masque d'objet,
j) prédiction d'un masque d'objet actuel transitoire, qui décrit pour chaque objet la position et l'endroit de la fraction animée de l'image, en translatant le masque d'objet détecté auparavant - dans le cas de la première détection le masque de départ - à partir de l'information de mouvement orientée d'objet, par exemple des vecteurs de mouvement,
k) établissement d'une première image de prédiction, qui se produit quand la valeur du masque d'objet est choisie pour les segments de défaut d'une manière telle par exemple "1", que l'on accepte la fraction animée de l'image, après les séquences d1) à d3) de la revendication 1,
l) établissement d'une seconde image de prédiction, qui se produit quand la valeur du masque d'objet pour les segments de défaut est choisie de telle façon par exemple "0" que l'on accepte la fraction immobile de l'image, après les séquences d1) à d3) de la revendication 1,
m) formation de la différence entre l'image ré-obtenue du côté de la réception selon un procédé orienté de blocs et respectivement la première et la seconde image de prédiction dans chaque segment de défaut,
n) comparaison par segment de défaut de ces images différentielles finalement obtenues, en ce qui concerne la puissance.

3. Procédé selon la revendication 1, pour établir une image améliorée en particulier pour reproduire l'image sur un moniteur,
procédé caractérisé par les séquences suivantes :
o) la fraction de l'image, qui se trouve dans un masque d'objet préparé en particulier selon la revendication 2, est copiée à partir de l'image ré-obtenue du côté de la réception selon un procédé orienté de blocs,
p) la zone qui ne se trouve pas dans le masque d'objet est copiée à partir de la mémoire des arrière-plans, à l'endroit où elle contient l'information connue et sans cela également à partir de l'image ré-obtenue du côté de la réception selon un procédé orienté de blocs.

4. Procédé selon la revendication 1 et 2,
caractérisé en ce que
pour obtenir une information de mouvement orientée d'objet améliorée on utilise les séquences suivantes :
q) vérification si une zone d'image se trouve seulement pour une faible partie, par exemple de moins de 50 %, dans le masque d'objet et vérification pour de telles zones d'image, si l'une des zones d'image voisines de cette zone d'image se trouve pour une grande partie dans le masque d'objet ; dans le cas où l'une des zones d'images voisines se trouve en grande partie, par exemple pour plus de 50%, dans le masque d'objet, sélection de l'information de mouvement, par exemple du vecteur de mouvement, de la zone d'image voisine à la place de la zone d'image qui se trouve pour une plus petite partie dans le masque d'objet, zone qui a en commun avec le masque d'objet la plus grande partie.

5. Procédé selon la revendication 2 ou 4,
caractérisé
par l'établissement suivant du côté de la réception d'un masque d'objet définitif :
r) préparation d'un masque d'objet de départ, par exemple d'un masque d'objet sous la forme d'une image binaire, qui a partout la valeur zéro,
s) détermination d'un masque d'objet actuel transitoire grâce au fait que le masque d'objet déterminé auparavant est translaté par zone d'image en fonction de l'information de mouvement orienté d'objet, par exemple de vecteurs de mouvement,
t) établissement d'une image provisoire de prédiction, selon les séquences d1 à d3 de la revendication 1,
u) translation de l'information d'arrière-plan d'image au moyen de l'information codée de mouvement pour l'image transitoire de prédiction,
v) comparaison de l'information ainsi translatée d'arrière-plan d'image avec l'image de prédiction servant à détecter des zones d'image analogues, c'est-à-dire des zones d'images dans lesquelles l'information d'arrière-plan a été entraînée par erreur,
w) modification de ces valeurs du masque d'objet, par exemple de 1 à 0, qui correspondent à la fraction immobile de l'image, dans ces zones analogues, au cas où la puissance d'image différentielle entre l'arrière-plan non translaté et l'image codée orientée de zone d'image par exemple l'image codée orientée de blocs, est petite et où la puissance d'image différentielle ne s'est pas accrue par l'image de défaut résiduelle (différence entre une image codée orientée de bloc et l'image de prédiction),
x) autre amélioration du masque d'objet à l'aide des séquences f) à h) selon la revendication 1.

6. Procédé selon la revendication 3, servant à établir une image davantage améliorée,
caractérisé en ce que
dans les séquences o) et p) de la revendication 3 on utilise à la place du masque d'objet le masque d'objet davantage amélioré à la séquence x) de la revendication 5.

7. Procédé selon la revendication 5,
caractérisé en ce que
l'on procède à une modification du masque d'objet seulement quand la réduction de la puissance d'image différentielle se trouve encore au-dessus d'un seuil, par exemple du seuil de bruit.

8. Procédé selon l'une des revendications 2 à 7,
caractérisé en ce que
les objets qui ne consistent qu'en peu de points d'image, sont enlevés du masque d'objet.

9. Procédé selon l'une des revendications 2 à 8,
caractérisé en ce que
la fraction de l'image de reproduction, qui se trouve à l'intérieur du masque d'objet, est en plus filtrée à travers un filtre passe-bas.

10. Procédé selon l'une des informations 1 à 9,
servant à l'interpolation du côté de la réception d'images intermédiaires en mettant à zéro pour l'information d'arrière-plan d'image immobile les informations codées de mouvement, par exemple les vecteurs de mouvement, et en cadrant les informations de mouvement codées se trouvant à l'intérieur du masque d'objet en fonction de l'intervalle de temps entre les images prédéfinies et les images interpolées, et en établissant les images intermédiaires interpolées telles que les images de prédiction selon les caractéristiques d1) à d3) de la revendication 1.
